# EUROPÄISCHE PATENTANMELDUNG

(11) **EP 1 041 840 A2**
(43) Veröffentlichungstag der Anmeldung: **04.10.2000**
(21) Anmeldenummer: 00106882.4
(22) Anmeldetag: 31.03.2000
(51) Int. Cl.: H04Q 7/38, H04M 3/428

(54) **Verfahren zur Verbesserung der Erreichbarkeit von Mobilfunkteilnehmern**

(30) Priorität: 01.04.1999 DE 19915160
(71) Anmelder: DeTeMobil Deutsche Telekom MobilNet GmbH, 53227 Bonn (DE)
(72) Erfinder: Schmitz Helmut, D-56743 Mendig (DE)

(57) **Zusammenfassung**

Die Erfindung betrifft ein Verfahren zur Verbesserung der Erreichbarkeit von Mobilfunkteilnehmern, insbesondere Teilnehmern von digitalen Mobilfunknetzen. Die Problemstellung besteht darin, das Zustandekommen einer Kommunikationsverbindung auch dann zu erreichen, wenn der angerufene Teilnehmer kurzzeitig verhindert ist.

Dazu sieht die Erfindung vor, daß der angerufene Teilnehmer über einen eingehenden Verbindungswunsch eines anrufenden Teilnehmer benachrichtigt wird, und der Verbindungswunsch für eine vom angerufenen Teilnehmer vorgebbare Zeitspanne aufrechterhalten wird bis die Verbindung durch Annahme durch den angerufenen Teilnehmer zustande kommt.

## Beschreibung

Die Erfindung betrifft ein Verfahren zur Verbesserung der Erreichbarkeit von Mobilfunkteilnehmern, insbesondere Teilnehmern von digitalen Mobilfunknetzen.

Mobilfunkteilnehmer, die an einer Besprechung oder einer Veranstaltung teilnehmen, schalten in der Regel ihr Mobiltelefon ab, oder werden sogar zum Abschalten aufgefordert, da das Klingeln des Mobiltelefons in vielen Fällen störend ist. Dadurch sind diese Mobilfunkteilnehmer für andere Festnetz- oder Mobilfunkteilnehmer nicht mehr erreichbar, solange wie ihr Mobiltelefon abgeschaltet ist.

Es sind zwar Mobiltelefone mit Vibrationsalarm auf dem Markt, die kein akustisches Klingelsignal abgeben, jedoch ist eine direkte Annahme des Gespräches während einer Besprechung oder Veranstaltung störend und wird daher vom Teilnehmer oft vermieden.
Eine andere bisher nutzbare Möglichkeit ist, daß der Teilnehmer eine Rufumleitung auf seine Mobilbox aktiviert, bevor er sein Mobiltelefon ausschaltet, so daß ankommende Gespräche auf die Mobilbox umgeleitet werden. Hierbei besteht jedoch der Nachteil, daß der anrufende Teilnehmer gar nicht oder ungern auf die Mobilbox spricht und der angerufene Teilnehmer nach Beendigung der Besprechung sofort seine Mobilbox abfragen muß, um sich über eingegangene Anrufwünsche zu informieren.

Die Aufgabe der Erfindung besteht darin, ein Verfahren zur Verbesserung der Erreichbarkeit von Mobilfunkteilnehmern vorzuschlagen, mit dem Ziel, das Zustandekommen einer Kommunikationsverbindung auch dann zu erreichen, wenn der angerufene Teilnehmer kurzzeitig verhindert ist.

Die Lösung dieser Aufgabe ergibt sich erfindungsgemäss durch die Merkmale des Patentanspruchs 1.

Die Erfindung beruht darauf, daß der angerufene Teilnehmer über einen eingehenden Verbindungswunsch eines anrufenden Teilnehmer, beispielsweise lautlos mittels eines nicht-akustischen Signals, benachrichtigt wird, wobei der Verbindungswunsch für eine vom Teilnehmer vorgebbare Zeitspanne aufrechterhalten wird bis die Verbindung durch Annahme durch den angerufenen Teilnehmer zustande kommt. Dies ist nicht zu verwechseln mit dem regulären "Klingeln" beim Aufbau einer Verbindung, sondern es wird hier eine definierte Zeitspanne gesetzt, innerhalb derer der angerufene Teilnehmer versucht das Gespräch anzunehmen.

Der Vorteil der Erfindung besteht darin, daß der Teilnehmer für andere Teilnehmer besser erreichbar wird, da er durch Nutzung des vorgeschlagenen Verfahrens in vielen Fällen auf die Aktivierung der Rufumleitung auf seine Mobilbox verzichten kann. Der eingehende Verbindungswunsch wird für die vorgegebene Zeitspanne von z.B. 30 Sekunden, aufrecht erhalten, so daß dem Teilnehmer ausreichend Zeit bleibt, um das Gespräch ungestört anzunehmen.

Damit ergibt sich der Vorteil, daß Teilnehmer ihr Mobiltelefon auch in Veranstaltungen und Besprechungen angeschaltet lassen können und über SMS oder Paging, sofern ein Funkrufempfänger zur Verfügung steht, in Form einer Textnachricht unauffällig über eingehende Anrufe informiert werden. Eine Benachrichtigung mittels Vibrationsalarm ist ebenfalls denkbar, sofern das Mobilfunkendgerät des angerufenen Teilnehmers diese Funktion unterstützt. Die Benachrichtigung über SMS oder Paging kann in vorteilhafter Weise mit dem Vibrationsalarm des Mobiltelefons kombiniert werden.

Der anrufende Teilnehmer wird bis zum Zustandekommen der Verbindung in einer Warteschleife gehalten. Es ist vorgesehen, daß der anrufende Teilnehmer in der Warteschleife ein spezielles Rufsignal eingespielt bekommt, welches ihn darauf hinweist, daß der angerufene Teilnehmer benachrichtigt wird und schnellstmöglich das Gespräche annehmen wird.

In einer Weiterbildung der Erfindung ist vorgesehen, daß der anrufende Teilnehmer eine spezielle Ansage eingespielt bekommt, die ihn zum Warten auffordert, z.B. "Ihr Gesprächspartner wird umgehend benachrichtigt und wird versuchen, innerhalb von 30 Sekunden für Sie ansprechbar zu sein. Bitte halten Sie die Verbindung für einen Augenblick".
Ist eine vorgegebene Zeitspanne verstrichen und konnte der angerufene Teilnehmer das Gespräch nicht annehmen, so findet erfindungsgemäss eine Rufumleitung des Anrufes auf die Mobilbox statt, wobei dem anrufenden Teilnehmer wiederum eine Ansage eingespielt wird, z.B. "Der gewünschte Gesprächspartner ist im Moment nicht direkt erreichbar, wird aber umgehend benachrichtigt. Bitte hinterlassen Sie eine Nachricht auf der Mobilbox".

Wurde der angerufene Teilnehmer über ein Funkrufsignal benachrichtigt, so wird er beim Aktivieren seines Mobilfunkendgerätes innerhalb der vorgegebenen Zeitspanne automatisch mit dem anrufenden Teilnehmer verbunden. Natürlich kann die Annahme des Gesprächs auch verweigert werden.

Vorzugsweise wird der Verbindungswunsch zunächst immer an die Mobilfunkrufnummer geleitet. Falls jedoch die Verbindung nicht innerhalb der vorgegeben Zeitspanne zustande kommt, wird der Verbindungswunsch auf die Mobilbox oder sequentiell an einen oder mehrere weitere vom Teilnehmer zuvor angegebene Kommunikationsanschlüsse, z.B. Festnetztelefon, Pager, etc., umgeleitet.
Dabei kann die Rufumleitungssequenz, gemäss den Vorgaben des Teilnehmers, in Abhängigkeit von der Tageszeit aktiviert werden, wobei für verschiedene Tageszeiten jeweils die Einrichtung einer anderen Rufumleitungssequenz möglich ist.

Die Erfindung wird als ein neuer Dienst in das im Mobilfunknetz vorhandene Diensteangebot integriert. Zur Aktivierung des neuen Dienstes kann der Teilnehmer dieses Leistungsmerkmal z.B. über eine oder mehrere Servicenummern des Mobilfünknetzes einrichten, ausrichten, ändern, aktivieren und deaktivieren.
Die Administration des Dienstes erfolgt vom Teilnehmer selbst vorzugsweise über das Mobilfunkendgerät und einen netzseitigen Sprachserver, der mit dem Teilnehmer in Dialog tritt. Eine Administration des Dienstes über das Internet bzw. World Wide Web ist ebenfalls vorgesehen.
Weitere Möglichkeiten zur Administration sind mittels eines SAT-fähigen Mobilfunkendgerätes (SAT = SIM Application Toolkit) oder durch ein Call Center des Mobilfunknetzbetreibers oder Providers.

Nachfolgend wird die Erfindung anhand eines Ausführungsbeispiels unter Bezugnahme auf die Zeichnungsfiguren näher erläutert. Es zeigen
- Figur 1:: Eine schematische Darstellung verschiedener miteinander verknüpfter Kommunikationsnetze ;
- Figur 2:: Schematische Darstellung des Weiterleitens bzw. Umleitens des Anrufwunsches an den angerufenen Teilnehmer und Information des anrufenden Teilnehmers.

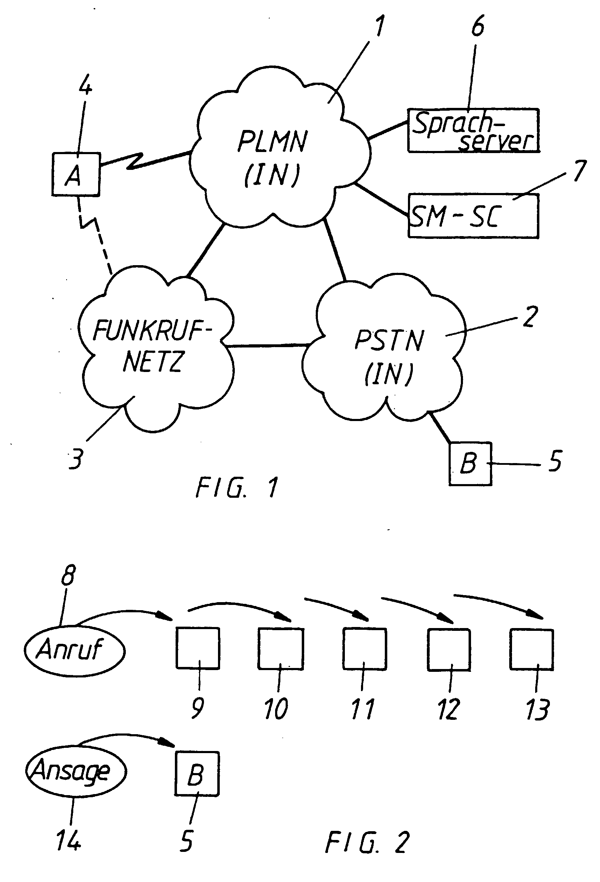

Figur 1 zeigt die grundsätzliche Zusammenschaltung verschiedener Telekommunikationsnetze, einem Mobilfunknetz 1, einem öffentlichen Festnetz 2 und einem Funkrufnetz 3.

Die Realisierung des erfindungsgemässen Verfahrens erfolgt vorzugsweise über die vorhandenen Einrichtung und Funktionen der Intelligenten Netze (IN). Das Teilnehmerprofil kann z.B. mittels der IN-Funktionalitäten in einem Dienstesteuerungspunkt (SCP: Service Control Point) des Intelligenten Netzes generiert und die Informationen an die relevanten Netzelemente des Mobilfunknetzes 1, insbesondere die Vermittlungsstellen (MSN), die Teilnehmerdatenbank (HLR), die Mobilbox und einen zur Dialogführung mit dem Teilnehmer eingerichteten Sprachserver 6 übermittelt.

Es wird davon ausgegangen, daß ein Teilnehmer 5 des Festnetzes 2 einen Teilnehmer 4 des Mobilfunknetzes 4 erreichen will und einen Anrufwunsch absetzt, d.h. die Mobilfunkrufnummer des Teilnehmers 4 wählt. Des weiteren wird vorausgesetzt, daß der angerufene Teilnehmer den erfindungsgemässen Dienst für sich eingerichtet hat. Das bedeutet, daß der Teilnehmer 4 das "Klingelsignal" seines Mobilfunkendgerätes vorübergehend abgeschaltet hat und nur über Vibrationsalarm, eine Kurznachricht (SMS) oder einen Funkruf benachrichtigt werden kann.

In einem ersten Szenario wird der angerufene Teilnehmer mittels Vibrationsalarm über den vom anrufenden Teilnehmer 5 eingehende Anrufwunsch benachrichtigt. Gleichzeitig erhält der anrufende Teilnehmer über den an das Mobilfunknetz angebundenen Sprachserver 6 eine Ansage oder Information eingespielt und wird in eine Warteschleife gestellt. Die Ansage könnte z.B. lauten: "Ihr Gesprächspartner wird umgehend benachrichtigt und wird versuchen, innerhalb von 30 Sekunden für Sie ansprechbar zu sein. Bitte halten Sie die Verbindung für einen Augenblick".

Innerhalb dieser gegeben Zeitspanne von z.B. 30 Sekunden kann sich der angerufene Teilnehmer 4 auf das Gespräch einstellen und dieses annehmen, ohne andere zu stören oder von anderen gestört zu werden.

Ist die vorgegebene Zeitspanne von z.B. 30 Sekunden verstrichen und konnte der angerufene Teilnehmer das Gespräch nicht annehmen, so findet eine Rufumleitung des Anrufes auf die Mobilbox statt, wobei dem anrufenden Teilnehmer wiederum vom Sprachserver 6 eine Ansage eingespielt wird, z.B. "Der gewünschte Gesprächspartner ist im Moment nicht direkt erreichbar, wird aber umgehend benachrichtigt. Bitte hinterlassen Sie eine Nachricht auf der Mobilbox".

In einem zweiten Szenario wird der angerufene Teilnehmer von der Kurznachrichtenzentrale 7 mittels einer Kurznachricht über den vom anrufenden Teilnehmer 5 eingehende Anrufwunsch benachrichtigt.
Der nachfolgende Ablauf des Verbindungsaufbaus und der Information des anrufenden Teilnehmers 5 ist identisch wie im ersten Szenario beschrieben.

Ein drittes Szenario sieht vor, den angerufenen Teilnehmer nicht über das Mobilfunknetz 1 sondern das Funkrufnetz 3 über den vom anrufenden Teilnehmer 5 eingehende Anrufwunsch zu benachrichtigt. Diese Möglichkeit ist insbesondere einsetzbar, wenn der angerufene Teilnehmer 4 sein Mobilfunkendgerät abgeschaltet hat und über das Mobilfunknetz 1 keine Nachrichten empfangen kann. Dies setzt aber voraus, daß der angerufene Teilnehmer 4 gleichzeitig Teilnehmer des Funkrufnetzes 1 ist und über einen geeigneten Funkrufempfänger verfügt.
Teilnehmer 4 wird mittels Funkruf über einen eingehenden Anruf informiert. Gleichzeitig erhält der anrufende Teilnehmer 5 über den an das Mobilfunknetz 1 angebundenen Sprachserver 6 eine Ansage oder Information eingespielt und wird in eine Warteschleife gestellt.

Innerhalb dieser gegeben Zeitspanne von z.B. 30 Sekunden kann der angerufene Teilnehmer 4 nun sein Mobilfunkendgerät aktivieren, wobei vom Mobilfunknetz 1 der eingegangene Verbindungswunsch bestätigt wird. Vorzugsweise wird der Anrufwunsch sofort und automatisch zum anrufenden Teilnehmer 4 durchgestellt.

Figur 2 zeigt schematisch verschiedene Möglichkeiten der Information des angerufenen Teilnehmers 4 über einen eingehenden Verbindungswunsch. Wenn ein Anrufwunsch den Teilnehmer 4 nicht direkt über sein Mobilfunkendgerät erreicht, wird er sequentiell anhand eines in einem Suchplan festgelegten Suchprofils gesucht. Als letzter Zielanschluß ist die Mobilbox 13 als Default-Rufnummer eingetragen. Das gilt auch für den Fall, das keine anderen Suchziele (Rufnummern) im Suchplan eingetragen ist. Der Teilnehmer kann dabei mehrere weitere Suchziele 10-12 im Suchplan einrichten.

Sobald ein Anrufwunsch 8 für den Teilnehmer 4 eingeht, wird vom Mobilfunknetz 1 zunächst versucht, den Teilnehmer über sein Mobilfunkendgerät 9 mittels z.B. Vibrationsalarm zu informieren. Sollte dies nicht möglich sein, so wird im nächsten Schritt versucht, den Teilnehmer über den Kurznachrichtendienst 10 zu erreichen. Falls der Teilnehmer über sein Mobilfunkendgerät nicht erreichbar ist (abgeschaltet hat) und über einen Funkrufempfänger 11 verfügt, wird der Anrufwunsch per Funkruf übermittelt. Sollte auch dies nicht möglich sein, so wird der Anrufwunsch zu einem vom Teilnehmer zuvor festgelegten
Kommunikationsanschluss 12 umgeleitet. Wenn auch diese Benachrichtigungsmöglichkeit fehlschlägt wird der Anruf zu der Mobilbox 13 des Teilnehmers durchgestellt.
Wahrend dieser sequentiellen Folge von Benachrichtigungsversuchen wird dem anrufenden Teilnehmer 5 ein entsprechender Ansagetext eingespielt, der ihn für eine vorbestimmte Zeitspanne zum Warten auffordert.

In einer Weiterbildung ist eine zeitabhängige Suche vorgesehen. Bei der zeitabhängigen Suche definiert der Teilnehmer 4, für welchen Zeitraum bzw. welche Zeiträume, die Rufnummern im Suchplan gültig sind. Beispielsweise ist das erste Ziel 9,10 (Mobilfunkendgerät) nur zwischen 08:00 Uhr und 16:00 Uhr an Werktagen gültig, und Ziel 12 (Telefon Zuhause) gilt zwischen 16:00 Uhr und 08:00 Uhr Werktags. Am Wochenende werden alle Gespräche auf die Mobilbox 13 geleitet.

Die Administration des Dienstes erfolgt vom Teilnehmer 4 selbst, vorzugsweise über sein Mobilfunkendgerät. Der Teilnehmer wählt beispielsweise über eine Servicerufnummer den Sprachserver 6 an. Hier werden ihm verschiedene Menüs zur Auswahl und Steuerung der Funktionen angeboten. Zunächst muß der Dienst für jeden Teilnehmer einmalig eingerichtet werden. Durch Anwahl der Servicerufnummer kann der Dienst beliebig aktiviert, geändert oder deaktiviert werden. Die verschiedenen oben beschriebenen Varianten zur Benachrichtigung des angerufenen 4 sowie des anrufenden Teilnehmers 5 können vom Teilnehmer, der den Dienst nutzt, nach seinen Wünschen eingerichtet oder verändert werden. Natürlich ist jederzeit eine Abfrage der augenblicklichen Einstellungen des Dienstes über Sprach- oder Textausgabe möglich.

### Zeichnungslegende

- 1: Mobilfunknetz (PLMN)
- 2: Öffentliches Festnetz (PSTN)
- 3: Funkrufnetz
- 4: Teilnehmer A (angerufener)
- 5: Teilnehmer B (anrufender)
- 6: Sprachserver
- 7: Kurznachrichtenzentrale (SM-SC)

- 8: Eingehender Anrufwunsch
- 9: Mobilfunkendgerät d. Teilnehmers A
- 10: Funkrufempfänger d. Teilnehmers A
- 11: Kurznachrichtenfunktion d. Teilnehmers A
- 12: Kommunikationsanschluss d. Teilnehmers A
- 13: Mobilbox d. Teilnehmers A
- 14: Ansage

## Patentansprüche

1. Verfahren zur Verbesserung der Erreichbarkeit von Mobilfunkteilnehmern, insbesondere Teilnehmern von digitalen Mobilfunknetzen,
dadurch gekennzeichnet,
daß der angerufene Teilnehmer (4) über einen eingehenden Verbindungswunsch eines anrufenden Teilnehmer (5) benachrichtigt wird, und daß der Verbindungswunsch für eine vom angerufenen Teilnehmer vorgebbare Zeitspanne aufrechterhalten wird bis die Verbindung durch Annahme durch den angerufenen Teilnehmer zustande kommt.

2. Verfahren nach Anspruch 1, dadurch gekennzeichnet, daß der anrufende Teilnehmer (5) bis zum Zustandekommen der Verbindung in einer Warteschleife gehalten wird.

3. Verfahren nach Anspruch 1 oder 2, dadurch gekennzeichnet, daß der anrufende Teilnehmer (5) in der Warteschleife ein spezielles Tonsignal eingespielt bekommt.

4. Verfahren nach einem der Ansprüche 1 bis 3, dadurch gekennzeichnet, daß der anrufende Teilnehmer (5) in der Warteschleife eine spezielle Ansage eingespielt bekommt.

5. Verfahren nach einem der Ansprüche 1 bis 4, dadurch gekennzeichnet, daß der angerufene Teilnehmer (4) bei eingeschaltetem Mobilfunkendgerät mittels einer Kurznachricht oder mittels Vibrationsalarm über den eingehenden Verbindungswunsch des anrufenden Teilnehmers benachrichtigt wird.

6. Verfahren nach einem der Ansprüche 1 bis 5, dadurch gekennzeichnet, daß der angerufene Teilnehmer (4) gleichzeitig Teilnehmer eines Funkrufnetzes (3) ist.

7. Verfahren nach Anspruch 6, dadurch gekennzeichnet, daß der angerufene Teilnehmer (4) bei ausgeschaltetem Mobilfunkendgerät mittels einer Funkrufnachricht über den eingehenden Verbindungswunsch des anrufenden Teilnehmers benachrichtigt wird.

8. Verfahren nach einem der Ansprüche 1 bis 7, dadurch gekennzeichnet, daß der angerufene Teilnehmer (4) beim Aktivieren seines Mobilfunkendgerätes innerhalb der vorgegebenen Zeitspanne automatisch mit dem anrufenden Teilnehmer verbunden wird.

9. Verfahren nach einem der Ansprüche 1 bis 8, dadurch gekennzeichnet, daß der Verbindungswunsch zunächst immer an die Mobilfunkrufnummer geleitet wird.

10. Verfahren nach einem der Ansprüche 1 bis 9, dadurch gekennzeichnet, daß der Verbindungswunsch auf die Mobilbox des angerufenen Teilnehmers (4) oder sequentiell an einen oder mehrere weitere vom Teilnehmer (4) zuvor angegebene Kommunikationsanschlüsse (10-12) umgeleitet wird, falls die Verbindung nicht innerhalb der vorgegeben Zeitspanne zustande kommt.

11. Verfahren nach einem der Ansprüche 1 bis 10, dadurch gekennzeichnet, daß die Rufumleitungssequenz in Abhängigkeit von der Tageszeit aktiviert wird.

12. Verfahren nach einem der Ansprüche 1 bis 11, dadurch gekennzeichnet, daß für verschiedene Tageszeiten jeweils eine andere Rufumleitungssequenz aktiviert wird.

13. Verfahren nach einem der Ansprüche 1 bis 12, dadurch gekennzeichnet, daß der Dienst und das Diensteprofil vom Teilnehmer (4) über eine oder mehrere Servicerufnummern des Mobilfunknetzes (1) eingerichtet, ausgerichtet, geändert, aktiviert und deaktiviert werden können.

14. Verfahren nach einem der Ansprüche 1 bis 13, dadurch gekennzeichnet, daß die Administration des Dienstes über das Mobilfunkendgerät des Teilnehmers (4) und einen mobilfunknetzseitigen Sprachserver (6) erfolgt.

15. Verfahren nach einem der Ansprüche 1 bis 14, dadurch gekennzeichnet, daß die Administration des Dienstes durch den Teilnehmer (4) über das Intemet bzw. World Wide Web erfolgt.

16. Verfahren nach einem der Ansprüche 1 bis 15, dadurch gekennzeichnet, daß Administration des Dienstes durch den Teilnehmer (4) durch ein SAT-fähiges Mobilfunkendgerät erfolgt.

17. Verfahren nach einem der Ansprüche 1 bis 16, dadurch gekennzeichnet, daß Administration des Dienstes durch ein Call Center des Mobilfunknetzbetreibers oder Providers erfolgt.
